# EUROPEAN PATENT SPECIFICATION

(11) **EP 1 390 840 B1**
(45) Date of publication and mention of the grant of the patent: **16.07.2014**
(21) Application number: 02737156.6
(22) Date of filing: 24.05.2002
(51) Int. Cl.: G06F 9/00, H04N 7/173

(54) **SYSTEM AND METHOD FOR SCHEDULING THE DISTRIBUTION OF ASSETS FROM MULTIPLE ASSET PROVIDERS TO MULTIPLE RECEIVERS**
SYSTEM UND VERFAHREN ZUR EINTEILUNG DER VERTEILUNG VON MEDIEN VON MEHREREN MEDIENANBIETERN ZU MEHREREN EMPFÄNGERN
SYSTEME ET PROCEDE DE PROGRAMMATION DE LA DISTRIBUTION DE MULTIMÉDIA PROVENANT DE PLUSIEURS FOURNISSEURS DE MULTIMÉDIA, A PLUSIEURS RECEPTEURS

(30) Priority: 25.05.2001 US 293902 P
(43) Date of publication of application: 25.02.2004
(73) Proprietor: N2 Broadband, Inc., Duluth, GA 30096 (US)
(72) Inventor: ADDINGTON, Timothy H., Roswell, GA 30075 (US)
(74) Representative: HOFFMANN EITLE
(86) International application number: PCT/US2002/016469
(87) International publication number: WO 2002/097611

(56) References cited:
- EP-A- 0 727 908
- EP-A- 1 146 731
- WO-A-01/60767
- WO-A-02/45423
- US-A- 5 404 516
- US-A- 5 815 662
- US-A- 5 920 700
- HWANG E ET AL: "Protocol for collaborative multimedia presentations" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30 July 2000 (2000-07-30), pages 45-48, XP010511399 ISBN: 0-7803-6536-4

## Description

### PRIORITY CLAIM TO PROVISIONAL APPLICATION

This application claims benefit of priority to U.S. Provisional Application Serial Number 60/293,902 entitled "Multi-Catcher Asset Distribution System and Method," filed May 25, 2001.

### TECHNICAL FIELD

The present invention is generally directed to the distribution of media assets by one or more asset providers to receivers for communication to subscribers. More particularly described, the present invention supports the scheduling of the distribution of assets to the receivers by asset providers using a scheduler, where the asset providers and the receivers have finite resources that can be used for the distribution of the assets.

### BACKGROUND OF THE INVENTION

In the digital cable television industry, asset providers, such as Home Box Office ("HBO"), Cable News Network ("CNN"), and the National Broadcasting Company ("NBC"), deliver digital media assets to receivers located at distribution endpoints, such as cable headends, for further distribution to subscribers. In conventional digital cable television systems, the asset provider transmits both the asset and metadata describing the asset to the cable headends, typically via satellite, in a digital data format. The cable headend receives the transmitted assets from the asset provider at a receiver. Typically, each receiver managed by the cable headend receives assets from a particular asset provider. Thus, if a cable headend receives assets from HBO, CNN, and NBC, then the cable headend would manage a first receiver that is dedicated to receiving the assets from HBO, a second receiver that is dedicated to receiving the assets from CNN, and a third receiver that is dedicated to receiving the assets from NBC. In this way, as the cable headends solicit and receive assets from a larger number of asset providers, the number of receivers needed to service the asset providers increases. Thus, using a dedicated receiver for each asset provider can be expensive, it can require large amounts of physical space to house the receivers at the cable headend, and it can result in an inefficient use of each receiver's resources. Specifically, each receiver is typically used only when the asset provider has assets to distribute to the cable headend. If the asset provider only distributes assets to the cable headend once per week, then its dedicated receiver sits idle and unused the remainder of the week.

A limited solution to this problem could be for multiple asset providers to distribute assets to a common receiver. Although such an approach could result in decreased receiver costs and physical space requirements, it also has its limitations. In particular, receivers have limited resources, including a finite processor speed, limited disk storage space, and limited satellite or network connectivity. Consequently, if multiple asset providers are attempting to distribute assets at the same time to one receiver, the receiver may be unable to receive, process, and store the assets. One way the asset providers could increase the likelihood that the assets are actually received by the receiver is by redistributing the assets multiple times per hour to ensure receipt by all receivers. However, such an approach requires extensive manual intervention at the receiver site and results in an inefficient use of valuable transport bandwidth.

Additionally, asset providers could coordinate the scheduling of the distribution of their assets in order to ensure that sufficient receiver resources are available at the time of distribution. Under such an approach, asset providers with competing asset delivery requests could agree to allocate receiver resources among themselves prior to the delivery of their assets. The agreement between the asset providers could then be used to create a resource sharing schedule. A particularly significant drawback to this approach is that it would preclude the dynamic scheduling of asset delivery requests by requiring asset providers to agree on a resource sharing schedule ahead of time. Moreover, the required coordination between multiple asset providers with assets of various sizes, levels of priority, and lifecycles creates inherent complexities in allocating the receiver's resources, it makes the distribution of assets from multiple asset providers extremely difficult to manage, and the resulting resource sharing schedule still may not make the most efficient use of the receiver's resources.

Accordingly, there is a need in the art for a cost-effective method and system for allocating receiver resources among multiple asset providers that allows for dynamic scheduling and rescheduling of asset delivery requests. Furthermore, there is a need in the art for a method and system for allocating receiver resources among multiple asset providers that minimizes manual intervention and promotes the efficient use of available transport bandwidth, physical space, and receiver resources.

EP-A-0727 908 relates to the delivery of video content and provides a method of transmitting bulk data with a component in the form of still or motion picture images. The data is sent from at least one sender to at least one receiver under the control of a managing network provider. By controlling all transmission time and routing options for each sender's transmission, the managing network provider can group transmission control components together for each transmission path as per-transmission-flexible control parameters. An interaction between the managing network provider and a sender allows preemptive traffic control. This interaction is initiated by the sender through a telephone, video telephone or computer e-mail in a call to the video mail delivery system's business office. The operator or interactive system of the video mail delivery system has direct access to the managing network's traffic management database which stores information on previously scheduled traffic. Together, the network control and traffic information determine optimal periods of future bandwidth availability for new virtual transmission path scheduling. Given the sender inputs such as specified receivers and transmission duration or size, and the existing knowledge of previously scheduled traffic, the office operator then proposes a number of alternative times for the actual transmission. Receiver availability for the specified times is then verified by a network operator. Once all receivers and the sender agree on a common transmission time, this information along with all other sender inputs is input to the managing network provider's traffic management database by the office operator or interactive system. Further, the managing network provider sets up each control point along the transmission path to each identified receiver for the scheduled transmission time.

US-A-5404 516 relates to the optimum allocation and scheduling of material in large scale commercial, industrial and military applications. The described system includes a first mechanism for receiving a collection of input parameters such as resources, priorities and constraints, and a second mechanism for processing data in accordance with the input parameters. The second mechanism further includes means for generating a collection of asset schedules, for providing a random set of combinations of asset schedules, and for providing a set of asset allocation schedules. A genetic algorithm utilizes a random seed input data parameter in a random number generator to randomly generate a population of solutions or sets of combinations of asset schedules represented as strings of indices. Further, the combinations of asset schedules are ranked or prioritized according to the ability to satisfy the problem objectives. A final evaluation determines the fitness of the selected set of combinations of asset schedules to be solutions.

US-A-5 920 700 relates to a software control system for distribution management of media assets. The described system utilizes a wide area network of interconnected distribution nodes or sites which each, in turn, may also serve a plurality of WANs or LANs to interactively distribute and manage assets at each of multiple nodes so as to optimize availability of assets to the end user. The focal point of the asset management system is an operation center which manages the distribution of assets to various network hubs and head ends, and then finally to the end user. Further, the asset management system comprises four basic managers integrated together, which are a storage resource manager, a schedule manager, a reporting and polling manager, and a configuration manager. The resource manager maintains an up to date working status of each and every asset and available storage location and transmission pathway. The schedule manager maintains a running queue of assets to be copied and distributed or deleted. In the case of a new asset to be distributed, the schedule manager obtains the date and time information from the configuration manager and further queues the asset for copying and distribution. When it is time for the asset to be copied and distributed to the network system, the request is sent through the resource manager which in turn sends the appropriate command to a copy asset block for implementation and registration.

US5920701 relates to scheduling of data transmissions from content sources to replicated servers. The scheduling is based on available resources which are network bandwidth and multicast addresses assigned to the content sources. The scheduling can be adjusted based on notifications on the completion of transmission. If the transmission was unsuccessful, a notification indicates why the transmission was unsuccessful (e.g., a link outage, a lack of resources at the replicated servers, an excessive error rate, etc.). Using such data, the scheduler can adjust the distribution schedules.

### Summary of the Invention

It is the object of the invention to allocate receiver resources among multiple asset providers and the maximum use of the resources of the asset providers and receivers.

This object is solved by the invention as claimed in the independent claims.

Preferred embodiments are defined by the dependent claims.

This invention can allow multiple asset providers to deliver their assets to a common set of receivers by using a scheduler. A network provides a communication path from the asset providers to the receivers and a connection from the scheduler to each of the asset providers and the receivers. The asset delivery path may be a one-way connection such as satellite**.** The scheduler connection can be a two-way network such as an IP connection. Assets delivered over the asset delivery network may be unicast to a single receiver, multicast to a specific group of receivers, or broadcast to the entire population of receivers.

**Table I provides three basic elements in the inventive architecture:**

| | |
|---|---|
| Asset Provider | The asset provider can deliver assets to the receivers when it is instructed to do so by the scheduler. It typically comprises: |
| | • A resource schedule |
| | • An asset delivery request queue |
| | • An asset delivery schedule |
| Receiver | The receiver can receive the assets from the asset provider when it is instructed to do so by the scheduler. It typically comprises: |
| | • A resource schedule |
| | • An asset receipt schedule |
| Scheduler | The scheduler call determine when a particular asset provider should deliver a particular asset. It typically makes this determination based on: |
| | • The delivery request queue of all asset providers |
| | • The resource schedule of all asset providers |
| | • The resource schedule of all receivers |

In one aspect of the present invention, a scheduler has visibility to the asset and resource schedules of all asset providers and receivers. By having a view of the entire network of asset providers and receivers, the scheduler is able to make intelligent scheduling decisions that make maximum use of the resources of the asset providers and receivers. This enables multiple asset providers to efficiently deliver assets to multiple receivers.

Various aspects of the present invention may be more clearly understood and appreciated from a review of the following detailed description of the disclosed embodiments and by reference to the drawings and claims.

### BRIEF DESCRIPTION OF THE DRAWINGS

Figure 1 is a functional block diagram illustrating exemplary components of a system for scheduling the distribution of assets by multiple asset providers to multiple receivers using a scheduler in accordance with an exemplary embodiment of the present invention.
Figure 2 is a functional block diagram illustrating components of an asset provider constructed in accordance with an exemplary embodiment of the present invention.
Figure 3 is a functional block diagram illustrating components of an exemplary receiver constructed in accordance with an exemplary embodiment of the present invention.
Figure 4 is a functional block diagram illustrating components of an exemplary scheduler constructed in accordance with an exemplary embodiment of the present invention.
Figure 5 is a logic flow diagram illustrating an exemplary process for scheduling the distribution of assets by multiple asset providers to multiple receivers.
Figure 6 is a logic flow diagram illustrating an exemplary sub-process or routine of Figure 5 for attempting to schedule the distribution of a particular asset by an asset provider.
Figure 7 is an exemplary resource availability matrix built by a scheduler in attempting to schedule the distribution of assets.
Figure 8 is an exemplary resource availability matrix illustrating the scheduling by a scheduler the distribution of a particular asset.
Figure 9 is an exemplary resource availability matrix illustrating the rescheduling of scheduled assets by a scheduler to accommodate the distribution of a new asset using the resource availability matrix.
Figure 10 is an exemplary resource availability matrix illustrating the non-contiguous scheduling of the distribution of an asset by a scheduler.

### DETAILED DESCRIPTION OF EXEMPLARY EMBODIMENTS

Although the illustrative embodiments will be generally described in the context of the cable television industry, those skilled in the art will recognize that the present invention may be implemented in satellite television systems (wherein satellite television providers distribute digital assets directly to satellite set-top boxes located at the homes of subscribers), and in the digital content industry, and for any application in which an asset is distributed to one or more receivers that can receive the asset. More specifically, those skilled in the art will recognize that other exemplary embodiments of the present invention may be implemented for applications in which assets are distributed by asset providers (having finite resources to distribute the asset) to receivers (having finite resources to receive the assets distributed by the asset providers). Moreover, those skilled in the art will also recognize that an asset can comprise any type of media content, including and not limited to MP3 files, digital video files, digital audio or music files, and other digital media and multimedia content.

An exemplary embodiment of the present invention can comprise one or more asset providers that distribute one or more media assets, such as television movies, series, episodes, commercials, or a combination thereof, to one or more exemplary receivers (typically located at cable headends), for further distribution to an audience, such as cable subscribers. An asset provider can comprise any entity that distributes the asset to one or more receivers. The asset providers have a finite number of asset delivery resources with which to distribute the assets to the receivers. Similarly, the receivers have a finite number of resources with which to receive the assets via a communication medium.

An exemplary asset provider can comprise an asset storage device for storing such assets according to an asset identifier that the asset provider uniquely assigns to each asset. The asset provider can access the asset by using the asset identifier as a pointer to locate the asset stored at the asset storage device.

The asset provider typically uses metadata to describe the characteristics or attributes of each asset stored in the asset storage device. For example, an asset provider can use metadata to identify a television program's title, the actors and actresses who appear in the television program, the plot of the program, the program's genre, the television rating of the program, and the viewing time of the program. This metadata is eventually displayed to a cable subscriber through a user interface, such as an electronic cable program guide, and assists a user in selecting a cable television program to view.

The asset provider can use a metadata storage device, typically a digital storage medium, to store metadata and changes or updates to the metadata. An exemplary metadata storage device stores the metadata associated with each asset and the asset identifier that is uniquely assigned to that asset. Each metadata storage device is typically assigned a unique identifier, called a metadata storage device locator, to assist retrieval of metadata maintained by this storage medium..

When the asset provider is prepared to distribute assets to one or more receivers located at distribution endpoints, the asset provider bundles the asset with additional information into an asset bundle for transmission via a communication medium, such as a satellite communications link. The additional information typically comprises the metadata associated with the asset, the asset identifier identifying the asset, and the metadata storage device locator. Each distribution endpoint can receive the asset bundle from the asset provider via the communication medium and can route the asset bundle to an asset manager. After unbundling the asset bundle, the asset manager stores the asset and the asset identifier received from the asset provider in an exemplary asset storage device. Additionally, the asset manager typically stores the metadata describing the asset and the asset identifier identifying the asset in an exemplary metadata cache at the distribution endpoint.

Before distributing the asset to one or more receivers located at the distribution endpoints, the asset provider can request an exemplary scheduler to schedule the distribution of the asset. In response to the request, the scheduler can determine the best delivery time and resources -for an asset provider to use to distribute the asset to a receiver. The scheduler can compute this schedule based upon asset provider and receiver resources, as well as the asset delivery requests received from other asset providers, and any service level agreements that are in place for the receivers and asset providers. For example, if a previously scheduled distribution of assets conflicts with the requested delivery, the scheduler can attempt to reschedule previously scheduled assets to accommodate the current request. The scheduler can then inform all asset providers and receivers of the rescheduling changes so that the current request is accommodated.

Referring now to the drawings in which like numerals represent like elements throughout the several figures, exemplary embodiments of the present invention and the illustrative operating environment will be described.

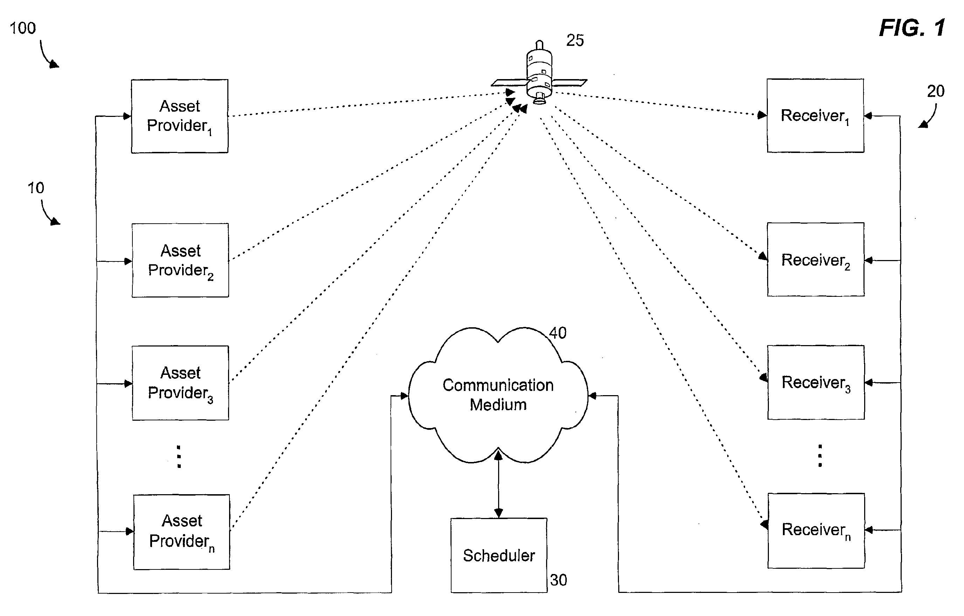

Figure 1 is a functional block diagram illustrating exemplary components of a system **100** for scheduling the distribution of assets by multiple asset providers **10** to multiple receivers **20** using a scheduler **30** in accordance with an exemplary embodiment of the present invention. Though individual components are illustrated in the exemplary embodiment of Figure 1, multiple components can be employed without departing from the scope and spirit of the present invention.

The exemplary system **100** can comprise one or more asset providers **10** and receivers **20** coupled to a communications medium **40** and operative to communicate with a satellite **25**. Asset providers **10** with a finite number of asset delivery resources can distribute assets to the receivers **20** over various types of network technologies. The asset providers **10** can distribute assets to the receivers **20** via the satellite **25** or an alternative communications link using a broadcast, multicast, or unicast communications methodology. One or more schedulers **30** can control the asset providers **10**. For example, the asset provider **10** can maintain a resource schedule that the scheduler **30** uses to determine when the asset may be sent from an asset provider **10**. The asset provider **10** can also maintain an asset provider delivery request queue that comprises a list of assets that have been sent to the scheduler **30** to be assigned delivery resources. The asset provider **10** can further maintain an asset provider delivery schedule that comprises a list of assets that have been scheduled for delivery.

Receivers **20** with a finite number of available resources receive assets from one or more asset providers **10**. In one exemplary embodiment, a receiver **20** receives assets from multiple asset providers **20** via multiple satellite transponders at varying times. In another exemplary embodiment, a receiver **20** receives assets from multiple asset providers **20** via multiple satellite transponders concurrently. In other exemplary embodiments, the receiver **20** can comprise multiple receivers **20**, or the receiver **20** can receive assets from other receivers **20** via an IP or other communication network, or the receiver **20** can comprise multiple receivers **20** and receive assets from other receivers **20** via a communication network. Regardless of how the receivers **20** receive the assets, they are typically under the control of one or more schedulers **30**. The receiver **20** typically maintains a receiver resource schedule that the scheduler **30** uses to determine when an asset may be sent to the receiver **20**.

As shown in Figure 1, a scheduler **30** can control asset providers **10** and receivers **20** to support the distribution of assets from the asset providers **10** to each selected receiver **20**. Using task scheduling algorithms well known in the art, such as the algorithm disclosed in U.S. Patent Serial Number 5,619,695 entitled "Method and Apparatus for Scheduling Resources," issued April 8, 1997, the scheduler **30** can determine the best delivery time and resources for an asset provider **10** to use to distribute an asset to a receiver **20**. For example, the scheduler **30** can use a scheduling algorithm to schedule the distribution of an asset to a receiver, taking into account the availability of the resources of the asset provider **10** and the receivers **20**, as well as the asset delivery requests received from the asset providers **10**, and any service level agreements (which may specify scheduling and resource priorities among the asset providers and the receivers) that are in place for the asset providers **10** and receivers **20**.

### Asset Providers

The asset providers **10** are responsible for delivering the assets to the receivers **20**. The method of delivery may be unicast, multicast, or broadcast. The networks and protocols used to deliver the assets are relevant in the design of this system only inasmuch as the scheduler **30** knows the capabilities of these components in order to determine a delivery schedule.

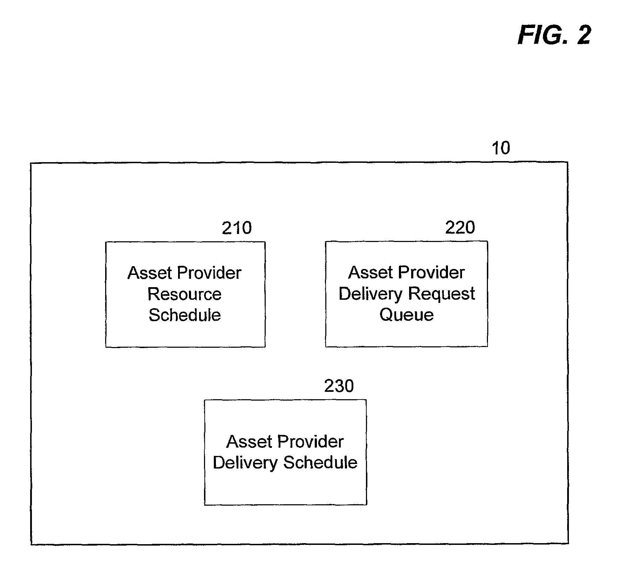

Figure 2 is a functional block diagram illustrating components of an exemplary asset provider **10** constructed in accordance with an exemplary embodiment of the present invention. For example, the asset provider 10 can comprise components useful for determining when and how assets are delivered:
- Asset Provider Resource Schedule **210**
- Asset Provider Delivery Request Queue **220**
- Asset Provider Delivery Schedule **230**

### Asset Provider Resource Schedule

The asset provider resource schedule **210** can comprise a list of resources that the asset provider **10** has available for the delivery of an asset over a period of time. Resources typically comprise delivery bandwidth, such as the data rate available over a satellite transponder at any given time, and asset bandwidth, such as the amount of data that it can retrieve at a particular time. For instance, an asset provider **10** may have the ability to send 45 Mb/s over a satellite **25** but be limited to 7.5Mb/s because it only has access to an asset over a 10baseT network at that time. Additionally, an asset provider **10** may have multiple resources available at any given time. For instance, an asset provider **10** may be able to transmit over four different transponders simultaneously at a particular time.

As is understood by those skilled in the art, not all asset provider **10** resources may be able to access all receivers **20**. That is, of the four transponders in the previous example, it is possible that only half of the receivers **20** are able to tune to two of the transponders and the other half are able to tune to all of them. Also, resources available to an asset provider **10** may vary over time. An asset provider **10** may have a full transponder available to it at 45Mb/s for an hour and then not at all for several hours after that.

Generally, it can be the responsibility of the asset provider **10** to maintain the provisioning of the asset provider resource schedule **210**. The asset provider resource schedule **210** can reflect physical hardware and business arrangements such as leased transponder space and network bandwidth. Any time the asset provider resource schedule **210** is updated, a message can be sent to the scheduler **30** with the new schedule. The scheduler **30** may also request the asset provider resource schedule **210** from the asset provider **10** for audit and synchronization purposes.

An asset provider **10** can be shared among multiple schedulers **30**. When an asset provider **10** is shared among multiple schedulers **30**, it can be the responsibility of the asset provider **10** to allocate its resources among the schedulers **30**. The asset provider resource schedule **210** sent to a scheduler **30** should reflect only those resources that are controlled by that scheduler **30**.

### Asset Provider Delivery Request Queue

The asset provider delivery request queue **220** typically comprises a list of the assets that need to be scheduled for delivery. An entry in this queue can comprise:
- Asset Information, comprising the location and size of the asset to be delivered.
- Availability Time, comprising the time at which the asset becomes available for delivery.
- Delivery Time, comprising the time by which the asset must be delivered to the receivers **20**.
- Receiver List, comprising the one or more receivers **20** or Receiver Groups to which the asset is to be delivered.
- Optional Criteria, comprising additional information that the scheduler **30** may use to determine when to schedule the delivery of the asset. This may comprise a preferred transport stream, delivery time, bit rate, or other parameters.

The asset provider **10** is responsible for updating the asset provider delivery request queue **220**. When an item is added to the asset provider delivery request queue **220**, deleted from the asset provider delivery request queue **220**, or modified in the asset provider delivery request queue **220**, the asset provider **10** can send an "asset provider asset schedule request" message to the scheduler **30** notifying it of the asset provider delivery request queue **220** update.

### Asset Provider Delivery Schedule

When the asset provider **10** has an asset in its asset provider delivery request queue **220**, it sends a "delivery request" message to the scheduler **30**. The scheduler **30** then determines the best time and resources for the asset provider **10** to use to deliver the asset. When the scheduler **30** has recalculated the delivery schedule, it sends an "asset delivery schedule update" message to the asset provider **10**. This message tells the asset provider **10** when to deliver the asset and the resources to use to deliver the asset. The asset provider **10** can store the message in its asset provider delivery schedule **230**.

When the scheduler **30** calculates a delivery schedule, it may have to reschedule other assets that have already been scheduled. Since the receiver resources are shared among multiple asset providers **10**, the scheduler **30** may have to reschedule asset delivery for asset providers **10** that did not send the asset delivery request. For this reason, an asset provider **10** must always listen for "asset delivery schedule update" messages from the scheduler **30**.

An "asset delivery schedule update" message typically comprises a list of all asset delivery requests that the scheduler **30** knows about for that asset provider **10**. The possible delivery states for an asset delivery request comprise:
- A "Scheduled" state, which means that the scheduler **30** has determined a delivery time and a set of resources that the asset provider **10** should use to deliver the asset.
- The "Pending" state, which means that the scheduler **30** has received the request but has not yet determined the parameters for the asset provider **10** to deliver the asset.
- The "Rejected" state, which means that the scheduler **30** has received the request and has determined that the asset cannot be delivered by the requested time with the resources available.
- The "Paused" state, which means that the delivery of an asset is temporarily suspended. In other words, the asset provider **10** should stop sending the asset until the Pause state is removed from the asset. It should be noted that some transport mechanisms might not support the pausing of asset transmission. The pause mechanism must be supported by the asset provider **10** and by all the receivers **20** that are scheduled to receive the asset before the scheduler **30** can put an asset transmission in the Paused state.
- The "Terminated" state, which means that the delivery of an asset has been permanently halted. In other words, the asset providers **10** should stop sending the asset and return it to the Pending state, and should await a new delivery schedule.

It is particularly important to note that once an asset has been placed in the Scheduled state for delivery, it may be returned back to the Pending state by the scheduler **30**.

When the scheduler **30** gets an updated asset provider resource schedule **210** from the asset providers **10** and receivers **20** or new asset delivery requests from an asset provider **10**, it can recalculate the delivery schedule for all asset providers **10**. It is possible that due to lack of resources or the scheduling of a higher priority asset, an asset delivery that was previously scheduled may no longer be accommodated at all. As a last resort, the scheduler **30** may stop the transmission of an asset that is already underway to accommodate a more urgent request.

In these cases, the asset provider **10** must return the asset status to the Pending or Rejected state. It is not necessary to resubmit the delivery request to the scheduler **30** for an asset that is in the Pending state unless the queue information for that asset has changed. If the scheduler **30** places an asset in the Rejected state, the asset provider **10** must modify the delivery request parameters and re-submit it to the scheduler **30**.

An asset provider **10** may modify or delete an asset that has been scheduled by sending an "asset provider asset schedule request" message. If the scheduled asset is currently being sent, the asset provider **10** should stop sending the asset before deleting it from the scheduler **30**. If the asset provider **10** is requesting to modify an asset that is currently being sent, it continues sending the asset until notified of any changes by the scheduler **30**.

### Receivers

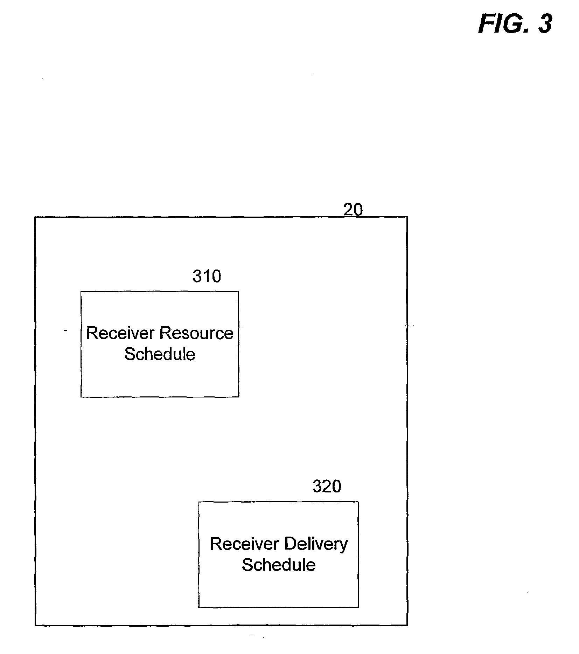

Figure 3 is a functional block diagram illustrating components of an exemplary receiver **20**. An exemplary receiver **20** comprises two components that can be used to determine when and how asset is received:
- Receiver Resource Schedule **310**
- Receiver Delivery Schedule **320**

### Receiver Resource Schedule

The receiver resource schedule **310** can comprise a list of resources that the receiver **20** has available for the receipt of an asset over a period of time. Each receiver **20** of the asset distribution system **100** may have a different resource configuration. Receiver resources may comprise the number of simultaneous transmissions a receiver **20** can receive, the amount of asset storage of the receiver **20**, the number of asset providers **10** it is able to receive from, the transponder bandwidth, the disk capacity available at any given time, asset bandwidth, such as the maximum amount of data that the receiver **20** can handle at a particular time, and other factors that may affect the ability of the receiver **20** to receive an asset.

For instance, a receiver **20** may have the ability to receive 45 Mb/s over a satellite **25** but be limited to 10Mb/s because of internal processing limitations. Additionally, a receiver **20** may have multiple resources available at any given time. For instance, a receiver **20** may be able to receive from four different transponders simultaneously at a particular time.

Generally, a receiver **20** maintains the provisioning of the receiver resource schedule **310**. The receiver resource schedule **310** can reflect physical hardware and networking arrangements, such as the number of receivers **20** and disk capacity. Any time the receiver resource schedule **310** is updated, the receiver **20** can send a message to the scheduler **30** with the new schedule. The scheduler **30** may also request the receiver resource schedule **310** from the receiver **20** for audit and synchronization purposes.

When a receiver **20** is shared among multiple schedulers **30**, the receiver **20** can allocate its resources among the schedulers **30**. The receiver resource schedule **310** sent to a scheduler **30** reflects only those resources that are controlled by that scheduler **30**.

### Receiver Delivery Schedule

The receivers **20** can be provisioned with a receiver delivery schedule **320**, which typically comprises the assets that are going to be delivered from the various asset providers **10**. The receiver delivery schedule **320** can comprise a list of assets that a receiver **20** is scheduled to receive over a period of time. Each asset in the receiver delivery schedule **320** can comprise the time of delivery and resources that are required to receive the asset.

An exemplary scheduler **30** maintains the receiver delivery schedule **320**. The scheduler **30** can maintain the receiver delivery schedule **320** by sending a "receiver delivery schedule update" message to the receiver **20**. This message comprises a list of all assets that a receiver **20** is scheduled to receive.

If multiple schedulers **30** control a receiver **20**, the "delivery schedule update" message comprises only the assets that were scheduled by the scheduler **30** that sent the message. In this case, the receiver **20** can provide an internal mechanism for tracking which asset is scheduled by a particular scheduler **30** because scheduled assets may be deleted in a subsequent message.

### Schedulers

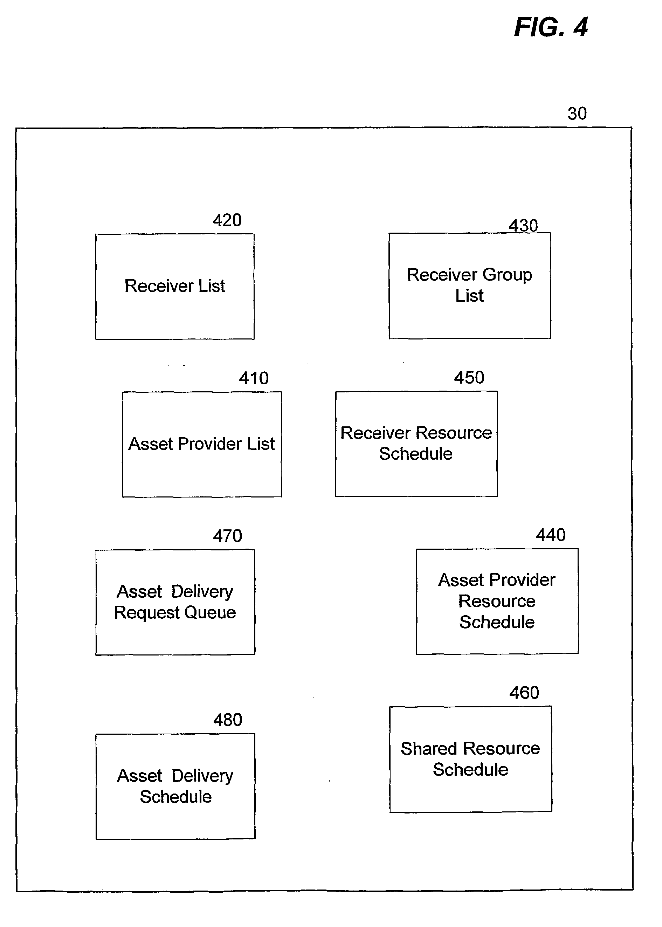

Figure 4 is a functional block diagram illustrating components of an exemplary scheduler **30**. An asset delivery distribution network according to one embodiment of the invention includes one or more schedulers **30**. A scheduler **30** is responsible for determining which asset provider **10** can send its asset to one or more receivers **20** at a given time using a specified set of resources from the asset provider **10** and receivers **20**.

An exemplary scheduler **30** maintains the following information in order to determine which asset is delivered:
- Asset Provider List **410**
- Receiver List **420**
- Receiver Group List **430**
- Asset Provider Resource Schedule **440**
- Receiver Resource Schedule **450**
- Shared Resource Schedule **460**
- Asset Delivery Request Queue **470**
- Asset Delivery Schedule **480**

### Asset Provider List

The asset provider list **410** comprises a list of all asset providers **10** that are managed by the scheduler **30**. The asset provider list **410** can also comprise the addressing information that is necessary for the scheduler **30** to communicate with each asset provider **10**.

Generally, the asset provider list **410** can be maintained by the scheduler **30**. However, another exemplary embodiment of the invention can comprise an auto registration procedure, which could be used for asset providers **10** to locate the scheduler **30** and register their addresses without a need for manual configuration.

The exemplary scheduler **30** maintains an administrative and operational status of the asset providers **10** in the asset provider list **410**. The scheduler **30** can operate only with asset providers **10** that are in the list with an administrative status of "enabled" and an operational status of "on-line."

### Receiver List

The receiver list **420** comprises a list of receivers **20** that are managed by the scheduler **30**. The receiver list **420** also can comprise the addressing information that can be used by the scheduler **30** to communicate with the receiver **20**.

Generally, the receiver list **420** can be maintained by the scheduler **30**. However, in another exemplary embodiment of the present invention, an auto registration procedure could be used by the receivers **20** to locate the scheduler **30** and register their addresses without a need for manual configuration.

The exemplary scheduler **30** maintains an administrative and operational status of the receivers **20** in the receiver list **420**. The scheduler **30** can operate with receivers **20** that are in the receiver list **420** with an administrative status of "enabled" and an operational status of "on-line."

### Receiver Group List

The receiver group list **430** allows an asset provider **10** to treat receivers **20** as a group rather than having to specify each individual receiver **20**. When an asset provider **10** sends a request to schedule the delivery of an asset, the request can comprise the one or more receivers **20** to which the asset is to be delivered. However, if the asset provider **10** groups the receivers **20** into one or more groups in the receiver group list **430**, then the asset provider **10** can specify a single receiver group in the request.

A receiver **20** can be placed in as many or few receiver groups as needed. In other words, a receiver group may comprise as few as zero receivers **20** up to all receivers **20**. When a receiver **20** is removed from the receiver list **420**, it is also removed from all receiver groups that it has been assigned to.

The exemplary scheduler **30** maintains the receiver group list **430**, while the asset provider **10** can provision itself with the receiver group list **430**.

### Asset Provider Resource Schedule

The asset provider resource schedule **440** is similar to the asset provider resource schedule **210** that is maintained by the asset provider **10**. The exemplary scheduler **30** maintains an asset provider resource schedule **440** for each asset provider **10** in the asset provider list **410**. The scheduler **30** requests the asset provider resource schedule **210** from the asset provider **10** the first time that the asset provider **10** sends it an "asset delivery request" message, unless the asset provider **10** has already sent a "resource schedule update" message. The asset provider **10** is typically responsible for notifying the scheduler **30** any time the asset provider resource schedule **210** for resources under the control of that scheduler **30** are changed. The scheduler **30** may request an asset provider resource schedule **210** from an asset provider **10** at any time for audit or synchronization purposes.

The asset provider resource schedule **440** comprises a list of resources that are available on the asset provider **10** and the time that resource is available. Any change to an asset provider resource schedule **440** results in a new entry in the resource schedule **440**. For instance, if an asset provider **10** has a transponder resource of 10Mb/s available from 00:00:00 to 18:00:00 and only 5Mb/s available from 18:00:00 to 00:00:00, this would result in two entries in the asset provider resource schedule 440. The first entry would be for a transponder of 10Mb/s from 00:00:00 to 18:00:00 and the second entry would be for a transponder of 5Mb/s from 18:00:00 to 00:00:00.

Resource schedule entries can comprise repeat notations. That is, a resource schedule entry may be set to repeat daily, weekly, or some other period of time. Repeated resource schedules may be set to repeat forever or may be limited to a number of repetitions. All resource schedule entries can comprise a start time and end time for that resource availability. For resources that are always available, the start time and end time of the resource can be the same (i.e.: 00:00:00 to 00:00:00) and set to repeat forever.

Resource definitions are extensible. The scheduler 30 defines the resource template, and new resources may be added at any time. Resource definitions can be expressed using Extensible Markup Language ("XML"). However, in other embodiments of the present invention, other computer programming languages can be used to express the resource definitions. Each resource type has a resource identifier to distinguish it from all other types. The resource schedulers **30** use the resource type to determine the fields that describe the resource.

For instance, a transponder uses a transponder resource. The dictionary for the transport stream resource could comprise the following elements:
ResourceType: transponder
StartTime: 00:00:00
EndTime: 00:00:00
Repeat: daily forever
TransponderId: Galaxy3R_TP1
DataRate: 10MBS

Only the ResourceType element is required in the resource definition. Depending on the resource, some elements can have default values that are used if the element is not supplied. The StartTime, EndTime, and Repeat elements can be defined for every resource type. If a resource is available all of the time, these elements do not have to be included in the XML.

In the above example, the resource specifies 10Mb/s available all of the time on the Galaxy 3R satellite Transponder 1. The following definition would produce the same resource definition:
ResourceType: transponder
TransponderId: Galaxy3R_TP1
DataRate: 10MBS

Before an asset provider **10** or receiver **20** can use a resource template, it is preferably defined in the scheduler **30**.

### Receiver Resource Schedule

This receiver resource schedule **450** is similar to the receiver resource schedule **310** that is maintained by the receiver **20**. The exemplary scheduler **30** maintains a receiver resource schedule **450** for each receiver **20** in the receiver list **420**. The scheduler **30** can request the receiver resource schedule **310** from the receiver **20** the first time that an asset is requested to be sent to that receiver **20**, unless the receiver **20** has already sent a "resource schedule update" message. The receiver **20** is responsible for notifying the scheduler **30** any time the receiver resource schedule **310** for resources under the control of that scheduler **30** have been changed. The scheduler **30** may request a resource schedule **310** from a receiver **20** at any time for audit or synchronization purposes.

The receiver resource schedule **450** typically comprises a list of resources that are available on the receiver **20** and the time that resource is available. Any change to a receiver resource schedule **450** results in a new entry in the resource schedule **450**. For instance, if a receiver **20** has a satellite receiver resource of 45Mb/s available from 00:00:00 to 06:00:00 and from 15:00:00 to 18:00:00, this would result in two entries in the resource schedule. The first entry would be for a receiver **20** of 45Mb/s from 00:00:00 to 06:00:00 and the second entry would be for a receiver **20** of 45Mb/s from 15:00:00 to 18:00:00.

Resource schedule entries may contain repeat notations. That is, a resource schedule entry may be set to repeat daily, weekly, or some other period of time. Repeated resource schedules may be set to repeat forever or may be limited to a number of repetitions. All resource schedule entries can comprise a start time and end time for that resource availability. For resources that are always available, the start time and end time of the resource can be the same (i.e.: 00:00:00 to 00:00:00) and set to repeat forever.

Resource definitions are extensible. The scheduler **30** defines the resource template and new resources may be added at any time. Resource definitions can be expressed using XML or in any other computer programming language. Each resource type can have a resource identifier to distinguish it from all other types. The resource schedulers **30** use the resource type to determine the fields that describe the resource.

For instance, a satellite receiver **20** uses an Lband resource. The dictionary for the Lband resource would contain the following elements:
ResourceType: Lband
StartTime: 00:00:00
EndTime: 00:00:00
Repeat: daily forever
TransponderId: Galaxy3R_VH
DataRate: 45MBS

Only the ResourceType element is required in the resource definition. Depending on the resource, some elements can have default values that are used if the element is not supplied. The StartTime, EndTime, and Repeat elements are preferably defined for every resource type. If a resource is available all of the time, these elements do not have to be included in the XML. In the above example, the resource specifies 45Mb/s available all of the time on the Galaxy 3R satellite Vertical and Horizontal polarization. The following definition would produce the same resource definition:
ResourceType: Lband
TransponderId: Galaxy3R_VH
In this case the DataRate element does not have to be defined since the default is that the resource can receive a full feed from the transponder.

Before an asset provider **10** or receiver **20** can use a resource template, the resource must be defined in the scheduler **30**.

### Shared Resource Schedule

The shared resource schedule **460** typically comprises a list of all of the resources that the scheduler **30** has available to it over a period of time. These resources can be shared among multiple asset providers **10**. The exemplary scheduler **30** uses the shared resource schedule **460** to determine the most efficient schedule for satisfying all of the outstanding asset delivery requests.

The exemplary scheduler **30** maintains the shared resource schedule **460**. Resources in the shared resource schedule **460** can be determined based on physical availability, business agreements, and other factors. For instance, multiple asset providers **10** may share a transponder, but one asset provider **10** may have priority access to the transponder. In this case, if that asset provider **10** submits a request to deliver an asset, the scheduler **30** may delay previously scheduled assets by other asset providers **10** to ensure that the asset gets out.

The resources in the shared resource schedule **460** define the total resources that the scheduler **30** controls. The individual asset providers **10** and receivers **20** can maintain their own resource schedules **210, 310** and those schedules **210, 310** override the available resources in the shared resource schedule **460**. For instance, the shared resource schedule **460** may indicate that a transponder has 10Mb/s available to an asset provider **10** from 02:00:00 to 04:00:00. The asset provider resource schedule **210** from that asset provider **10** may indicate that the asset provider **10** can only deliver 5Mb/s during that time period. In this case, the scheduler **30** must accept the asset provider's **10** resource schedule **210** and will only schedule assets to be delivered at the 5Mb/s rate. On the other hand, the scheduler **30** will limit the resources to those imposed by its shared resource schedule **460**. In the above example, if the shared resource schedule **460** indicated that 5Mb/s was available on the transponder but the asset provider's **10** resource schedule **210** said that it could deliver 10Mb/s at that time, the scheduler **30** would limit the asset provider's **10** transmission to 5Mb/s.

### Asset Delivery Request Queue

The asset delivery request queue **470** typically comprises an entry for each asset that has an outstanding delivery request from all of the asset providers **10** that are managed by the scheduler **30**. The asset delivery request queue **470** is maintained by the exemplary scheduler **30** and can be updated as a result of an asset delivery request and asset delivery notification messages received from the asset providers **10**.

### Asset Delivery Schedule

The asset delivery schedule **480** typically comprises all of the asset requests that have been scheduled for delivery. The entries in the asset delivery schedule **480** comprises the resources that are allocated for the delivery of the asset and the start and stop times that they are allocated.

### Multiple Schedulers

In another exemplary embodiment of the present invention, multiple schedulers **30** may be used to control the same asset providers **10** and receivers **20**. Each scheduler **30** can operate independently and have no knowledge of the other schedulers **30**. It can be the responsibility of the asset providers **10** and receivers **20** to allocate their resources between the different schedulers **30**. The asset provider **10** can be responsible for sending the asset delivery requests to the correct scheduler **30** in this type of network. Any messages containing requests, resources, or schedules should comprise only those items that apply to the scheduler **30** that is controlling them.

### Scheduler Messages

All scheduling messages in the network are sent between the scheduler 30 and the asset provider **10** or the scheduler **30** and the receiver **20**.

### Provision Receiver Message

The "provision receiver" message comprises an administrative message and can typically be sent from an administrative console. It can be used to add, delete, or modify a receiver record in the receiver list **420**. The scheduler **30** uses these records to communicate with the receivers **20**.

### Provision Asset Provider Message

The "provision asset provider" message comprises an administrative message and can be typically sent from an administrative console. It can be used to add, delete, or modify an asset provider record in the asset provider list **410**. The scheduler **30** uses these records to communicate with the asset providers **10**.

### Provision Scheduler Message

The "provision scheduler" message comprises an administrative message and may be sent from an administrative console. It can be used to provision an asset provider **10** or receiver **20** with the information required to communicate with the scheduler **30**. Typically, the asset providers **10** and receivers **20** are provisioned with the address of the scheduler **30** through a network directory service such as DNS, so this message is not required unless the address of the scheduler **30** changes. In this case, it may be desirable to notify the asset providers **10** and receivers **20** of the change rather than to lose communications for the period of time that is required to discover the new address of the scheduler **30**.

### Get Asset Provider Resource Schedule Message

The "get asset provider resource schedule" message can be sent from the scheduler **30** to an asset provider **10** to get the current asset provider resource schedule **210** of available asset provider resources. This message comprises criteria to limit the amount of the asset provider resource schedule **210** that is returned to the scheduler **30** in the reply. Under normal operating conditions, the asset provider **10** can be responsible for creating the asset provider resource schedule **210**. The scheduler **30** uses the information returned from this request to determine what resources are available for the delivery of assets. These resources are allocated and the assets are scheduled for delivery. If multiple schedulers **30** control the asset provider **10**, then the asset provider **10** can allocate its resources among the schedulers **30**. An exemplary asset provider **10** reports only the resources that are available to the requesting scheduler **30** in response to a get asset provider resource schedule message.

### Asset Provider Update Resource Schedule message

The "asset provider update resource schedule" message can be sent from an asset provider **10** to the scheduler **30** when the asset provider resource schedule **210** is changed. The scheduler **30** uses this message to update its asset provider resource schedule **440**. As a result of this message, the scheduler **30** can restructure the asset delivery schedules **480** for all asset providers **10** to accommodate or take advantage of the new resource schedule **440**. As a result of this message, those assets that were previously scheduled to be delivered may no longer have the available resources. As a result, a restructured asset delivery schedule **480** may be created which does not comprise previously scheduled assets. When new asset delivery schedules **480** are received, it can be the responsibility of the asset provider **10** or receiver **20** to determine if an asset has been removed.

### Receiver Update Resource Schedule Message

The "receiver update resource schedule" message can be sent from a receiver **20** to the scheduler **30** when the receiver resource schedule **310** is changed. The scheduler **30** uses this message to update its receiver resource schedule **450**. As a result of this message, the scheduler **30** may restructure the asset delivery schedules for all asset providers **10** to acconunodate or take advantage of the new receiver resource schedule **450**. As a result of this message, assets that were previously scheduled to be delivered may no longer have the available resources. A restructured asset delivery schedule **480** may be created that does not comprise previously scheduled assets. When new asset delivery schedules **480** are received, it is the responsibility of the asset provider **10** or receiver **20** to determine if asset has been removed.

### Get Asset Provider Asset Schedule Message

The "get asset provider asset schedule" message can be sent from the scheduler **30** to an asset provider **10** to get the current schedule of assets to be delivered. This message comprises criteria to limit the amount of the asset provider delivery schedule **230** that is returned to the scheduler **30** in the reply. Under normal operating conditions, the scheduler **30** is responsible for creating the asset delivery schedule **480**. This message is provided as a mechanism for the scheduler **30** to perform audits of the system or to resynchronize the schedules when the scheduler **30** is restarted. An asset provider **10** reports the asset provider delivery schedule **230** for the asset that was scheduled by the requesting scheduler **30** in response to a get asset provider asset schedule message.

### Get Receiver Resource Schedule Message

The "get receiver resource schedule" message can be sent from the scheduler **30** to a receiver **20** to get the resource schedule **310** of a receiver **20**. This message comprises criteria to limit the amount of the receiver resource schedule **310** that is returned to the scheduler **30** in the reply. Under normal operating conditions, the receiver **20** is responsible for maintaining its receiver resource schedule **310**. If a single scheduler **30** controls a receiver **20**, the receiver resource schedule **310** is typically fixed for that receiver **20** and the scheduler **30** can be free to allocate the receiver resources as required. If multiple schedulers **30** control the receiver **20**, then the receiver **20** allocates those resources between the schedulers **30**. A receiver **20** should only report the resources that are available to the requesting scheduler **30** in response to a get receiver resource schedule message.

### Get Receiver Asset Schedule Message

The "get receiver asset schedule" message can be sent from the scheduler **30** to a receiver **20** to get the current schedule of assets **320** to be received. This message contains criteria to limit the amount of the receiver delivery schedule **320** that is returned to the scheduler **30** in the reply. Under normal operating conditions, the scheduler **30** is responsible for creating the receiver delivery schedule **320**. This message is provided as a mechanism for the scheduler **30** to perform audits of the system or to resynchronize the schedules when the scheduler **30** is restarted. A receiver **20** reports the receiver delivery schedule for assets that were scheduled by the requesting scheduler **30** in response to a get receiver asset schedule message.

### Asset Provider Asset Schedule Request Message

The "asset provider asset schedule request" message can be sent from an asset provider **10** to a scheduler **30** to add, modify, or delete one or more scheduled asset deliveries. This message is sent whenever the asset provider **10** makes a change to its asset provider delivery schedule **230**. The scheduler **30** determines if the requested changes can be accommodated within the bounds of the asset provider's **10** service level agreements. If the schedule change can be accommodated, the scheduler **30** accepts the changes and updates the asset delivery schedule **480** on any affected asset providers **10** including the requesting asset provider **10** and the delivery schedule on any affected receivers **20**. The requesting asset provider **10** should not update its asset provider delivery schedule **230** as a result of a positive response to this message. Instead, this asset provider **10** should wait for an "asset provider asset schedule update" message from the scheduler **30**. If the request cannot be accommodated, the request is denied and no schedules are changed.

### Asset Provider Delivery Notification Message

The "asset provider delivery notification" message can be sent from the asset provider **10** to the scheduler **30** when the delivery of an asset completes. The scheduler **30** uses this message to free the resources used by the asset provider **10** and receivers **20**.

### Asset Provider Delivery Schedule Update message

The asset provider delivery schedule update message can be sent from the scheduler **30** to an asset provider **10** to update one or more scheduled asset deliveries in the receiver delivery schedule **320**. This message is sent whenever the scheduler **30** adjusts the asset delivery schedule **480** to accommodate a new asset delivery request from an asset provider **10**.

### Receiver Delivery Schedule Update message

The "receiver delivery schedule update" message can be sent from the scheduler **30** to a receiver **20** to update one or more asset delivery schedule **320** entries. This message is sent whenever the scheduler **30** adjusts the asset delivery schedule **480** to acconmiodate a new asset delivery request from an asset provider **10**.

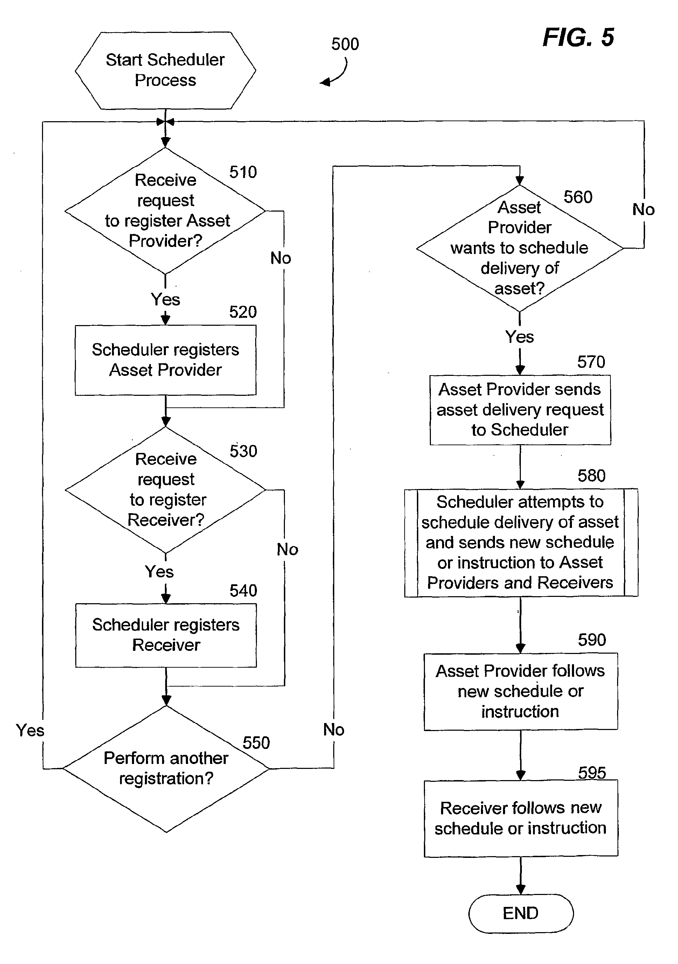

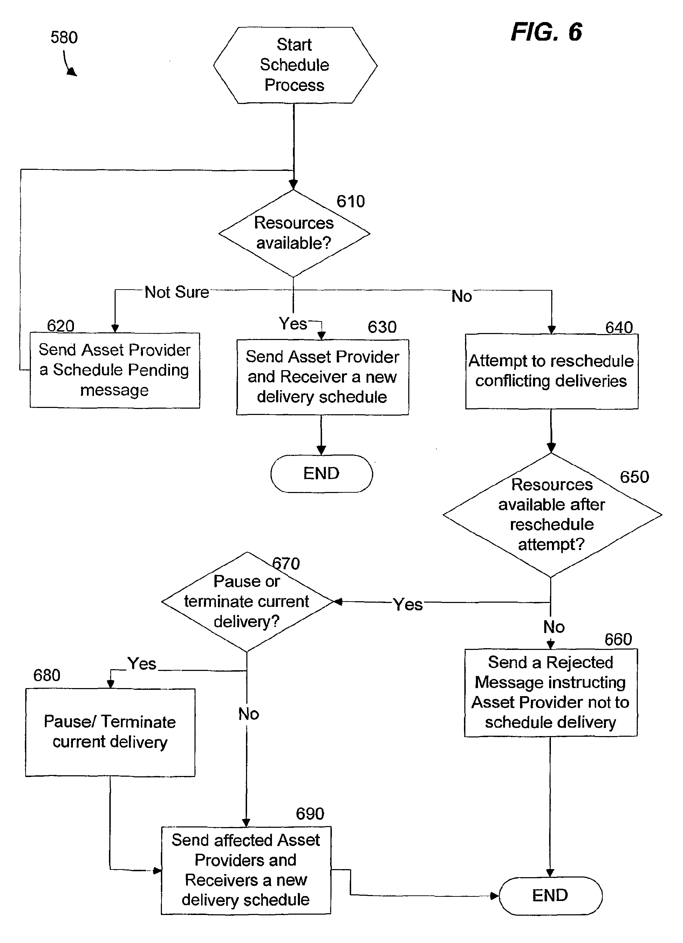

Figure 5 is a logic flow diagram illustrating an exemplary process **500** for scheduling the distribution of assets by multiple asset providers **10** to multiple receivers **20**. Certain steps in the processes described below in Figures 5 and 6 must naturally precede others for the present invention to function as described. However, the present invention is not limited to the order of the steps described, if such order or sequence does not alter the functionality of the present invention. It is recognized that some steps may be performed before or after other steps without departing from the scope and the spirit of the present invention.

In Step **510**, the scheduler **30** determines whether it has received a request from an asset provider **10** to register the asset provider **10**. If the scheduler **30** has not received such a request, then the process branches to Step **530**. However, if the scheduler **30** has received a request to register the asset provider **10**, then in Step **520**, the scheduler **30** registers the asset provider **10**. In Step **530**, the scheduler **30** determines whether it has received a request to register a receiver **20**. If the scheduler **30** has not received a request to register a receiver **20**, then the process branches to Step **550**. However, if the scheduler **30** has received such a request, then in Step **540**, the scheduler **30** registers the receiver **20**.

In Step **550**, the scheduler **30** determines whether it has received a request to register either another asset provider **10** or another receiver **20**. If the scheduler **30** has received such a request, then the process branches to Step **510**.

In Step **560**, the asset provider **10** detennines whether it wants to schedule the delivery of an asset to one or more receivers **20**. If an asset provider **10** does not want to schedule the delivery of an asset, then the process branches to Step **510**. However, if an asset provider **10** wants to schedule the delivery of an asset to one or more receivers **20**, then in Step **570**, the asset provider **10** sends an asset delivery request message to the scheduler **30**.

In Step **580**, in response to receiving a request from an asset provider **10** to schedule the delivery of an asset, the scheduler **30** attempts to schedule the delivery of the asset and sends a new schedule or a new instruction to the asset providers **10** and receivers **20** that are registered with the scheduler **30**. In Step **590**, in response to receiving an instruction or a new schedule from the scheduler **30**, the asset providers **10** implement the new schedule or the new instruction. In Step **595**, in response to receiving a new delivery schedule or new instruction from the scheduler **30**, the receivers **20** implement the new schedule or instruction.

Figure 6 is a logic flow diagram illustrating an exemplary sub-process or routine **580** of Figure 5 for attempting to schedule the distribution of a particular asset by an asset provider **10**. Step **610** is the first step in the exemplary process **580** of Figure 5. In Step **610**, the scheduler **30** determines whether the resources requested by the asset provider **10** are available. If the scheduler **30** is unable to determine whether the requested resources will be available, then in Step **620**, the scheduler **30** sends the asset provider **10** a "schedule pending" message, and the process branches again to Step **610**. However, if the scheduler **30** determines that the requested resources are available, then in Step **630**, the scheduler **30** sends the asset providers **10** and the receivers **20** a new delivery schedule **480**. If, however, in Step **610**, the scheduler **30** has determined that the requested resources are not available, then in Step **640**, the scheduler **30** attempts to reschedule the conflicting deliveries.

In Step **650**, the scheduler **30** determines whether the requested resources are available after attempting to reschedule the delivery of assets. If the resources are not available even after a reschedule attempt, then in Step **660**, the scheduler **30** sends a "rejected" message to the asset provider **10** instructing the asset provider **10** not to schedule the delivery of the asset. However, in Step **650**, if the resources become available after the scheduler **30** has attempted to reschedule other deliveries, then in Step **670**, the scheduler **30** determines whether an asset provider that is currently sending an asset to a receiver **20** must pause or terminate the delivery as a result of the new schedule. If in Step **670** the scheduler **30** determines that an asset provider **10** must pause or terminate the current delivery of an asset, then in Step **680**, the scheduler **30** instructs the asset provider **10** to pause or terminate that delivery of the asset. However, in Step **670**, if the asset provider **10** does not need to pause or terminate its current delivery, (or if in Step **680** the scheduler **30** has instructed the asset provider **10** to pause or terminate delivery), then in Step **690** the scheduler **30** sends the asset providers **10** and receivers **20** a new delivery schedule **480** that reflects the changes in the scheduled distribution of assets that results from the scheduler **30** rescheduling the deliveries of assets.

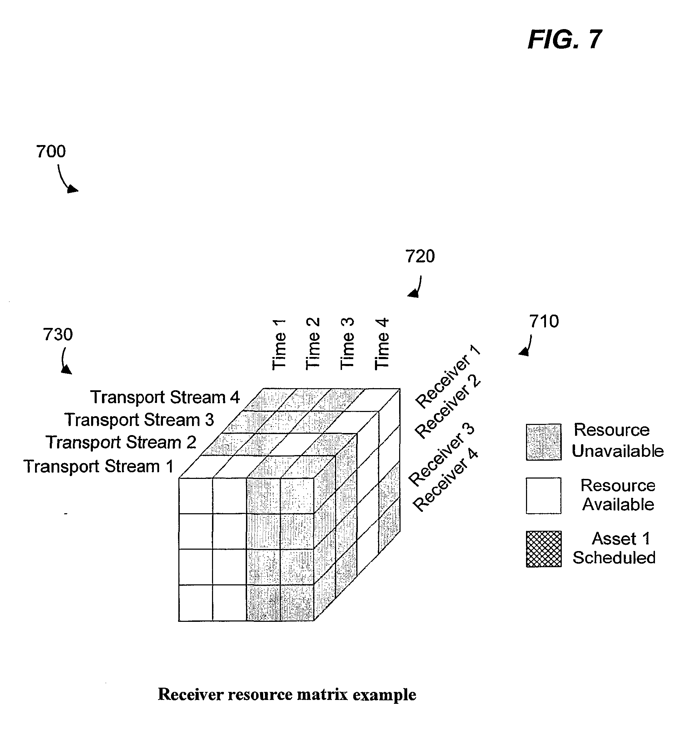

Figure 7 is an exemplary resource availability matrix **700** built by the scheduler **30** in attempting to schedule the distribution of assets according to one exemplary embodiment of the present invention. In this exemplary embodiment, the network comprises four receivers **710** mapped over four time periods **720**. The network also comprises four possible transport streams **730** of the same capacity: This example describes the scheduling of the receiver resources and assumes that the asset providers **10** are able to deliver to all transponders at the required data rate at all times, and all asset delivery requests have the same priority.

Based on the asset provider resource schedules **210** received from the asset providers **10** and the receiver resource schedules **310** received from the receivers **20**, the scheduler **30** builds the resource availability matrix **700**. The resource availability matrix **700** indicates the following asset delivery avails:
- Transport Stream 1, Time 1, All receivers
- Transport Stream 1, Time 2, All receivers
- Transport Stream 2, Time 3, All receivers
- Transport Stream 3, Time 4, All receivers
- Transport Stream 4, Time 4, Receivers 1 & 2

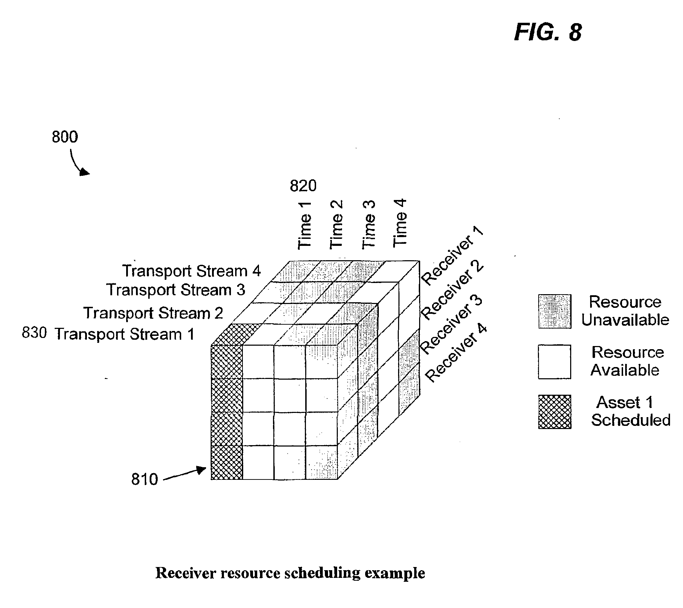

Figure 8 is an exemplary resource availability matrix **800** illustrating the scheduling of the distribution of a particular asset. Assume the scheduler **30** receives a request from an asset provider **10** to deliver an asset, Asset1 **810**, that consumes one time period at the given transponder rate. The scheduler **30** tries to find the first available time slice that will satisfy all receivers **20**. In this case, Asset1 **810** can be scheduled for delivery at Time 1 **820**, Transport Stream 1 **830**, since this was the earliest available time.

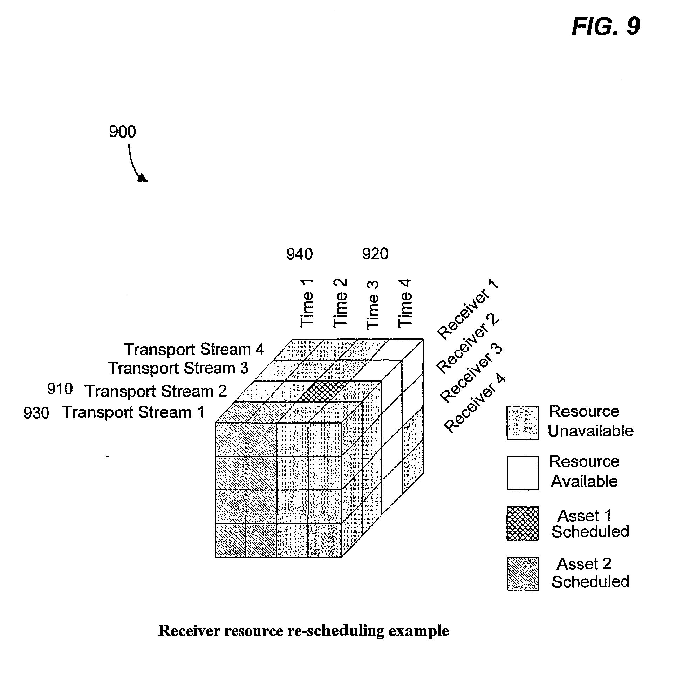

Next, assume the scheduler **30** receives a delivery request for Asset2 with a required delivery time indicating that the delivery must start by Time 4. Asset2 consumes two time periods at the given transponder rate. Since there is no avail large enough to handle Asset2 within the allotted delivery window in the resource availability matrix **800**, the scheduler **30** attempts to reschedule its delivery schedule. Figure 9 is an exemplary resource availability matrix **900** illustrating the rescheduling of scheduled assets to accommodate the distribution of a new asset using the resource availability matrix **900**. The scheduler **30** determines that Asset1 can be moved to the next available avail, Transport Stream 2 **910** Time 3 **920**, and still satisfy its delivery window requirements. This frees a contiguous avail, Transport Stream 1 **930** Time 1 **940**, for Asset2.

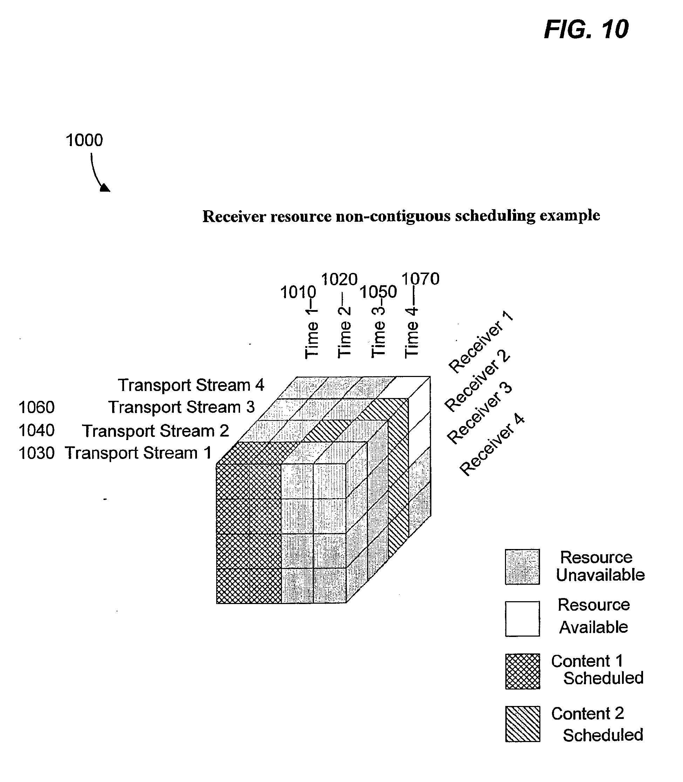

It is not always possible to find contiguous avails for the delivery of assets. If the asset providers **10** and receivers **20** support non-contiguous delivery of assets, the scheduler **30** may have to allocate the delivery of an asset over non-contiguous resources. Figure 10 is an exemplary resource availability matrix **1000** illustrating the non-contiguous scheduling of the distribution of an asset by the scheduler **30**.

In the aforementioned examples, if Asset1 had required two time periods, the scheduler **30** would have scheduled it for Time 1 **1010** and Time 2 **1020** of Transport Stream 1 **1030**. Now, when the request from an asset provider **10** to schedule Asset2 was received by the scheduler **30**, there would be no contiguous resources available within the allotted delivery times.

In this example, the scheduler **30** can split the delivery of Asset2 between Transport Stream 2 **1040**, Time 3 **1050** and Transport Stream 3 **1060**, Time 4 **1070** to satisfy the delivery requirements.

As shown in these simple examples, the scheduler **30** can attempt to find the best fit between asset delivery requests, asset provider resource schedules **440**, and receiver resource schedules **450**. Each time an asset delivery request is received by the scheduler **30,** the scheduler **30** can recalculate the asset delivery schedule **480** using the criteria defined in the following sections. In one exemplary embodiment of the present invention, a scheduler **30** can use the criteria to determine the asset delivery schedule **480.** In order to satisfy all delivery requests, the order of the criteria may be changed to accommodate all requests and meet the delivery schedules **480.**

### Scheduling Criteria

### Required Delivery Time

The scheduler **30** can calculate the amount of time required to deliver an asset. Working backwards from the required delivery date, it can determine the time that the delivery must start in order to meet the required delivery time. The scheduler **30** will not re-schedule an asset beyond this start time.

There are cases when an asset provider **10** with a higher priority or an asset with a higher priority will be scheduled that forces the scheduler **30** to cancel the delivery of an asset. In this case, the asset can be returned to the asset provider delivery request queue **220** and can be re-scheduled by the asset provider **10**.

Since the scheduler **30** attempts to deliver assets whenever there is bandwidth available, asset providers **10** should not specify a required delivery time unless they want the asset to be rejected after a certain time. By not specifying a required delivery time, the asset will work its way to the top of the scheduling queue based on the time that it was first scheduled.

There are cases where business arrangements and large volumes of high priority assets use all of the resources of the system **100.** In these cases, an asset may never be delivered. The only way to remedy this is to add more resources to the system.

### Receiver Footprint

The scheduler **30** attempts to fmd a time slot when all required receivers **20** are able to receive assets on a Transport steam that is available to the asset provider **10.** If a time slot cannot be found before the required delivery time, the scheduler **30** may determine that the asset must be sent multiple times. If no required delivery time is specified, the scheduler **30** will continue to move the asset delivery out in time until the asset may be delivered only once. In the case of a satellite delivery network, this means that all receivers **20** must have an Lband input that is receiving the same satellite transponder at the required data rate for the amount of time required to receive the asset.

### Asset Provicer Priority

After ensuring that all assets can be delivered within the required delivery window, the scheduler **30** can use the asset provider **10** priority to determine which asset will be delivered first. All resources in the system may be assigned an asset provider **10** priority for a given time period. This means that, if an asset provider **10** has an asset to deliver, the scheduler **30** searches the resource schedule during the delivery window for resources that are prioritized for that asset provider **10**. If such a resource is found, the scheduler **30** will attempt to use that resource for the delivery of that asset.

An example of this is satellite transponder bandwidth. An asset provider **10** may have the top priority on a transponder during a period of time. The scheduler **30** may use this transponder to deliver the assets of other asset providers **10** if an asset provider **10** with a higher priority does not have any assets to deliver. If an asset is scheduled for delivery on a resource and an asset provider **10** with a higher priority on that resource submits an asset delivery request, the scheduler **30** will re-schedule the asset from the lower priority asset provider **10** to make room for the asset provider **10** with the higher priority.

If a lower priority asset provider **10** is in the process of sending an asset, the scheduler **30** may instruct that asset provider **10** to pause its transmission to allow a higher priority asset provider **10** to deliver its asset. When there are no more assets to send from higher priority asset providers **10**, the scheduler **30** can instruct the lower priority asset provider **10** to resume transmission of its asset. If the asset provider **10** and receivers **20** do not support pause and resume transmissions, the scheduler **30** may cancel the transmission to allow a higher priority asset provider **10** to send its asset.

### Asset Priority,

Each scheduled asset can be assigned a priority. All other criteria being equal, the scheduler **30** can attempt to schedule the delivery of an asset of a higher priority ahead of an asset with a lower priority.

### Contractual Rules

The scheduler **30** may be programmed with a set of rules that enforce contractual obligations. For example, a particular asset provider **10** may have exclusive use of a resource over a period of time. The scheduler **30** can apply this rule ahead of all other scheduling concerns. That is, even if the asset provider **10** does not have any asset deliveries scheduled, the scheduler **30** will not use that resource for the contracted time period to schedule other the delivery requests of other asset providers **10**.

### Earliest Request

Asset delivery requests can be maintained in the asset delivery request queue **470** in the order that they are received. The scheduler **30** can attempt to schedule the oldest requests first. Other factors such as required delivery time, priorities, footprint, etc. may cause an asset to remain at the top of the queue sufficient resources do not come available to satisfy the request.

It should be understood that the foregoing relates only to illustrative embodiments of the present invention, and that numerous changes may be made therein without departing from the scope of the invention as defined by the following claims.

## Claims

1. A system for scheduling distribution of an asset using a finite number of asset provider resources and a finite number of receiver resources, the system comprising:
an asset provider (10), operative to define a first resource schedule (210) comprising a list of the resources available for distributing the asset and a time the resources are available, to issue (570) a request to schedule the distribution of the asset, and responsive to receiving a delivery schedule (230), operative to distribute the asset according to the delivery schedule;
a receiver (20), functionally coupled to the asset provider, operative to define a second resource schedule (310) comprising a list of the resources available for receiving the asset and a time the resources are available, and responsive to receiving the delivery schedule (320), operative to allocate the resources for receiving the asset according to the delivery schedule; and
a scheduler (30), functionally coupled to the asset provider and the receiver, responsive to the request to schedule the distribution of the asset, operative to determine (610) whether the resources are available to distribute the asset using the resources identified in the first resource schedule and the second resource schedule, wherein the scheduler is operative to issue (630) the delivery schedule, if the resources are available, otherwise, the scheduler is operative (640) to reschedule the distribution of other assets to the receiver, if rescheduling is possible, and
wherein the asset provider (10) is further adapted to send a message to the scheduler (30) when the asset provider resource schedule (210) is changed, and wherein the receiver (20) is further adapted to send a message to the scheduler (30) when the receiver resource schedule (310) is changed.

2. The system of claim 1, wherein the scheduler is further operative to send (660) a message to the asset provider that the distribution of the asset cannot be scheduled, if the resources are not available and the scheduler is not able to reschedule the distribution of the other assets.

3. The system of claim 1, wherein the delivery schedule comprises the resources to be used in distributing the asset and a time at which to distribute the asset.

4. The system of claim 1, wherein the asset provider and the receiver comprise finite resources, and wherein the scheduler is operative to receive a request from the asset provider to schedule (580) the distribution of the asset to the receiver.

5. The system of claim 4, wherein, if the resources are not available, the scheduler is operative to attempt (640) to accommodate the request by rescheduling the distribution of other digital assets to the receiver.

6. The system of claim 5, wherein the scheduler is operative (660) to inform the asset provider that the distribution of the asset cannot be scheduled, if the distribution of the other assets cannot be rescheduled.

7. The system of claim 4, wherein the scheduler comprises a receiver resource schedule (450) for identifying the resources the receiver has available for receiving the asset.

8. The system of claim 4, wherein the scheduler comprises an asset provider resource schedule (440), operative to identify the resources the asset provider has available for distributing the asset.

9. The system of claim 4, wherein the scheduler comprises an asset delivery schedule (480) for identifying one or more assets that have been scheduled for distribution by the scheduler.

10. A method for scheduling distribution of assets among asset providers (10) and receivers (20), wherein the asset providers have a finite number of asset provider resources and the receivers have a finite number of receiver resources for distributing the assets, comprising the steps of:
creating a first resource schedule (210) at each asset provider to identify the resources available to distribute the assets and a time the resources are available;
creating a second resource schedule (310) at each receiver to identify the resources available to receive the assets and a time the resources are available;
sending (570) a request from one of the asset providers to schedule the distribution of a selected one of the assets to a scheduler (30), the request identifying at least one receiver to receive the asset;
in response to the request, determining (610) at the scheduler whether the resources are available to distribute the selected asset using the first resource schedule of the asset provider and the second resource schedule of the at least one receiver; and
if the resources are available, sending (630) a delivery schedule (230, 320) from the scheduler to the asset provider and the receiver, the delivery schedule comprising the resources to be used by the asset provider in distributing the asset, the resources to be used by the at least one receiver in receiving the asset, and the time at which to distribute the asset, and comprising the further step of:
sending a message from the asset provider (10) to the scheduler (30) when the asset provider resource schedule (210) is changed, and sending a message from the receiver (20) to the scheduler (30) when the receiver resource schedule (310) is changed.

11. The method of claim 10, further comprising the steps of:
if the resources are not available, rescheduling (640) the distribution of other assets to accommodate the request, if rescheduling is possible; and
if rescheduling the distribution of other assets is not possible, informing (660) the asset provider that the distribution of the selected asset cannot be scheduled.

12. The method of claim 11, further comprising the step of sending (690) the delivery schedule to the asset provider and at least one receiver, if the distribution of the other assets can be rescheduled.

13. The method of claim 12, wherein the sending step comprises suspending the distribution of a selected one of the other assets, if the distribution of the selected asset has been rescheduled and if the asset is presently being distributed by the asset provider.

14. The method of claim 13, wherein the sending step comprises terminating the distribution of the selected one of the other assets, if the distribution of the selected asset could not be rescheduled and if the asset is presently being distributed by the asset provider.

15. The method of claim 10, wherein a satellite set-top box comprises the receiver.

16. The method of claim 15, wherein if the resources of the satellite set-top box are not available, the method comprising the step of rescheduling (640) the distribution of other digital assets to the satellite set-top box to accommodate the request, if the distribution of the other digital assets can be rescheduled.

17. The method of claim 16, comprising the step of informing (660) the asset provider that the distribution of the selected asset cannot be scheduled, if the distribution of the other assets cannot be rescheduled.

18. The method of claim 16, comprising the step of sending (690) the delivery schedule (480) to the asset provider, if the distribution of the other assets can be rescheduled.

19. The method of claim 18, wherein the sending step comprises suspending the distribution of a selected one of the other assets, if the distribution of the selected asset has been rescheduled and if the asset is presently being distributed by the asset provider.

20. The method of claim 19, wherein the sending step comprises terminating the distribution of the selected one of the other assets, if the distribution of the selected asset could not be rescheduled and if the asset is presently being distributed by the asset provider.

## Patentansprüche

1. System zum Terminieren einer Verteilung eines Medieninhalts unter Verwendung einer endlichen Anzahl von Medieninhalt-Provider-Ressourcen und einer endlichen Anzahl von Empfängerressourcen, wobei das System umfasst:
einen Medieninhalt-Provider (10), der arbeitet zum Definieren einer ersten Ressourcenterminierung (210) mit einer Liste der Ressourcen, die zum Verteilen des Medieninhalts verfügbar sind, und einer Zeit, zu der die Ressourcen verfügbar sind, zum Ausgeben (570) einer Anforderung zum Terminieren der Verteilung des Medieninhalts, und in Betrieb zum Verteilen des Medieninhalts gemäß der Lieferterminierung, ansprechend auf den Empfang einer Lieferterminierung (330);
einen Empfänger (20), funktional mit dem Medieninhalt-Provider gekoppelt, der arbeitet zum Definieren einer zweiten Ressourcenterminierung (310) mit einer Liste der verfügbaren Ressourcen zum Empfangen des Medieninhalts, und einer Zeit, zu der die Ressourcen verfügbar sind, und in Betrieb zum Zuweisen der Ressourcen für einen Empfang des Medieninhalts gemäß der Lieferterminierung, ansprechend auf den Empfang der Lieferterminierung (320); und
ein Terminierungsmittel (30), funktional mit dem Medieninhalt-Provider und dem Empfänger gekoppelt, ansprechend auf die Anforderung zum Terminieren der Verteilung des Medieninhalts in Betrieb zum Bestimmen (610), ob die Ressourcen zum Verteilen des Medieninhalts verfügbar sind, unter Verwendung der in der ersten Ressourcenterminierung und der zweiten Ressourcenterminierung identifizierten Ressourcen, wobei das Terminierungsmittel arbeitet zum Ausgeben (630) der Lieferterminierung, wenn die Ressourcen verfügbar sind, und ansonsten das Terminierungsmittel arbeitet (640) zur Umterminierung der Verteilung anderer Medieninhalte an den Empfänger, wenn eine Umterminierung möglich ist, und wobei der Medieninhalt-Provider (10) ferner ausgebildet ist zum Senden einer Nachricht an das Terminierungsmittel (30), wenn die Medieninhalt-Provider-Ressourcenterminierung (210) geändert wird, und wobei der Empfänger (20) ferner ausgebildet ist zum Senden einer Nachricht an das Terminierungsmittel (30), wenn die Empfängerressourcenterminierung (310) geändert wird.

2. System nach Anspruch 1, wobei das Terminierungsmittel ferner arbeitet zum Senden (660) einer Nachricht an den Medieninhalt-Provider, dass die Verteilung des Medieninhalts nicht terminiert werden kann, wenn die Ressourcen nicht verfügbar sind, und das Terminierungsmittel nicht in der Lage ist, die Verteilung der anderen Medieninhalt umzuterminieren.

3. System nach Anspruch 1, wobei die Lieferterminierung die Ressourcen erfasst, die bei einer Verteilung des Medieninhalts zu verwenden sind, und eine Zeit, zu der der Medieninhalt zu verteilen ist.

4. System nach Anspruch 1, wobei der Medieninhalt-Provider und der Empfänger endliche Ressourcen umfassen, und wobei das Terminierungsmittel arbeitet zum Empfangen einer Anforderung von dem Medieninhalt-Provider, um die Verteilung des Medieninhalts an den Empfänger zu terminieren (580).

5. System nach Anspruch 4, wobei dann, wenn die Ressourcen nicht verfügbar sind, das Terminierungsmittel in Betrieb ist, um einen Versuch (640) vorzunehmen, die Anforderung aufzunehmen, in dem die Verteilung anderer digitaler Medieninhalte an den Empfänger umterminiert wird.

6. System nach Anspruch 5, wobei das Terminierungsmittel in Betrieb ist (660), um den Medieninhalt-Provider zu informieren, dass die Verteilung des Medieninhalts nicht terminiert werden kann, wenn die Verteilung der anderen Medieninhalte nicht umterminiert werden kann.

7. System nach Anspruch 4, wobei das Terminierungsmittel eine Empfängerressourcenterminierung (450) umfasst, um die Ressource zu identifizieren, die der Empfänger zum Empfangen des Medieninhalts verfügbar hat.

8. System nach Anspruch 4, wobei das Terminierungsmittel ein Medieninhalt-Provider-Ressourcenterminierungsmittel (440) umfasst, das in Betrieb ist, um die Ressourcen zu identifizieren, die der Medieninhalt-Provider zum Verteilen des Medieninhalts verfügbar hat.

9. System nach Anspruch 4, wobei das Terminierungsmittel ein Medieninhalt-Liefer-Terminierungsmittel (480) umfasst, um einen oder mehrere Medieninhalte zu identifizieren, die zum Verteilen durch das Terminierungsmittel terminiert wurden.

10. Verfahren zum Terminieren einer Verteilung von Medieninhalten unter Medieninhalt-Providern (10) und Empfängern (20), wobei die Medieninhalt-Provider eine endliche Anzahl von Medieninhalt-Provider-Ressourcen aufweisen, und die Empfänger eine endliche Anzahl von Empfängerressourcen zum Verteilen der Medieninhalte aufweisen, umfassend die Schritte zum:
Erzeugen einer ersten Ressourcenterminierung (210) an jedem Medieninhalt-Provider, um die Ressourcen zu identifizieren, die zum Verteilen der Medieninhalte verfügbar sind, und einer Zeit, zu der die Ressourcen verfügbar sind;
Erzeugen einer zweiten Ressourcenterminierung (310) an jedem Empfänger, um die Ressourcen zu identifizieren, die für einen Empfang der Medieninhalte verfügbar sind, und einer Zeit, zu der die Ressourcen verfügbar sind;
Senden (5709 einer Anforderung von einem der Medieninhalt-Provider zum Terminieren der Verteilung eines ausgewählten der Medieninhalte an ein Terminierungsmittel (30), wobei die Anforderung zumindest einen Empfänger zum Empfangen des Medieninhalts identifiziert;
ansprechend auf die Anforderung, Bestimmen (610) an dem Terminierungsmittel, ob die Ressourcen zum Verteilen des ausgewählten Medieninhalts verfügbar sind, unter Verwendung der ersten Ressourcenterminierung des Medieninhalt-Providers und der zweiten Ressourcenterminierung des zumindest einen Empfängers; und
wenn die Ressourcen verfügbar sind, Senden (630) einer Lieferterminierung (230, 320) von dem Terminierungsmittel zu dem Medieninhalt-Provider und dem Empfänger, wobei die Lieferterminierung die Ressourcen umfasst, die durch den Medieninhalt-Provider beim Verteilen des Medieninhalts zu verwenden sind, die Ressourcen, die durch den zumindest einen Empfänger beim Empfang des Medieninhalts zu verwenden sind, und die Zeit, zu der der Medieninhalt verteilt wird, und umfassend den weiteren Schritt zum:
Senden einer Nachricht von dem Medieninhalt-Provider (10) an das Terminierungsmittel (30), wenn die Medieninhalt-Provider-Ressourcenterminierung (210) geändert wird, und Senden einer Nachricht von dem Empfänger (20) an das Terminierungsmittel (30), wenn die Empfängerressourcenterminierung (310) geändert wird.

11. Verfahren nach Anspruch 10, ferner umfassend die Schritte zum:
wenn die Ressourcen nicht verfügbar sind, Umterminieren (640) der Verteilung anderer Medieninhalte, um die Anforderung aufzunehmen, wenn eine Umterminierung möglich ist; und
wenn ein Umterminieren der Verteilung anderer Medieninhalte nicht möglich ist, Informieren (660) des Medieninhalt-Providers, dass die Verteilung des ausgewählten Medieninhalts nicht terminiert werden kann.

12. Verfahren nach Anspruch 11, ferner mit dem Schritt zum Senden (690) der Lieferterminierung an den Medieninhalt-Provider und zumindest einen Empfänger, wenn die Verteilung der anderen Medieninhalte umterminiert werden kann.

13. Verfahren nach Anspruch 12, wobei der Sendeschritt ein Suspendieren der Verteilung eines ausgewählten der anderen Medieninhalte umfasst, wenn die Verteilung des ausgewählten Medieninhalts umterminiert werden kann, und wenn der Medieninhalt gegenwärtig durch den Medieninhalt-Provider verteilt wird.

14. Verfahren nach Anspruch 13, wobei der Sendeschritt ein Beenden der Verteilung des ausgewählten der anderer Medieninhalte umfasst, wenn die Verteilung des ausgewählten Medieninhalts nicht umterminiert werden konnte, und wenn der Medieninhalt gegenwärtig durch den Medieninhalt-Provider erteilt wird.

15. Verfahren nach Anspruch 10, wobei eine Satelliten-Set-Top-Box den Empfänger umfasst.

16. Verfahren nach Anspruch 15, wobei dann, wenn die Ressourcen der Satelliten-Set-Top-Box nicht verfügbar sind, das Verfahren den Schritt umfasst zum Umterminieren (640) der Verteilung anderer digitaler Medieninhalte an die Satelliten-Set-Top-Box, um die Anforderung aufzunehmen, wenn die Verteilung der anderen digitalen Medieninhalte umterminiert werden kann.

17. Verfahren nach Anspruch 16, mit dem Schritt zum Informieren (660) des Medieninhalt-Providers, dass die Verteilung des ausgewählten Medieninhalts nicht terminiert werden kann, wenn die Verteilung der anderen Medieninhalt nicht umterminiert werden kann.

18. Verfahren nach Anspruch 16, mit dem Schritt zum Senden (690) der Lieferterminierung (480) an den Medieninhalt-Provider, wenn die Verteilung der anderen Medieninhalte umterminiert werden kann.

19. Verfahren nach Anspruch 18, wobei der Sendeschritt ein Suspendieren der Verteilung eines ausgewählten der anderen Medieninhalt umfasst, wenn die Verteilung des ausgewählten Medieninhalts umterminiert wurde, und wenn der Medieninhalt gegenwärtig durch den Medieninhalt-Provider verteilt wird.

20. Verfahren nach Anspruch 19, wobei der Sendeschritt ein Beenden der Verteilung des ausgewählten der anderen Medieninhalte umfasst, wenn die Verteilung des ausgewählten Medieninhalts nicht umterminiert werden konnte, und wenn der Medieninhalt gegenwärtig durch den Medieninhalt-Provider verteilt wird.

## Revendications

1. Système de programmation de la distribution d'un contenu à l'aide d'un nombre fini de ressources de fourniture de continus et d'un nombre fini de ressources de réception, le système comprenant :
un fournisseur de contenus (10), en mesure de définir un premier programme de ressources (210) comprenant une liste des ressources disponibles pour la distribution du contenu et une heure à laquelle les ressources sont disponibles, d'envoyer (570) une demande de programmation de la distribution du contenu et, en réponse à la réception d'un programme de fourniture (230), en mesure de distribuer le contenu conformément au programme de fourniture ;
un récepteur (20), couplé fonctionnellement au fournisseur de contenus, en mesure de définir un second programme de ressources (310) comprenant une liste des ressources disponibles pour la réception du contenu et une heure à laquelle les ressources sont disponibles et, en réponse à la réception du programme de ressources (320), en mesure d'attribuer les ressources pour recevoir le contenu conformément au programme de fourniture ; et
un programmateur (30), qui est couplé fonctionnellement au fournisseur de contenu et au récepteur et qui, en réponse à la demande de programmation de la distribution du contenu, est en mesure de déterminer (610) si les ressources sont disponibles pour la distribution du contenu en utilisant les ressources identifiées dans le premier programme de ressources et dans le second programme de ressources, le programmateur étant en mesure d'émettre (630) le programme de fourniture si les ressources sont disponibles et, sinon, le programmateur étant en mesure (640) de reprogrammer la distribution d'autres contenus vers le récepteur, si la reprogrammation est possible, le fournisseur de contenus (10) étant en outre conçu pour envoyer un message au programmateur (30) lorsque le programme de ressources du fournisseur de contenus (210) est modifié, le récepteur (20) étant en outre conçu pour envoyer un message au programmateur (30) lorsque le programme de ressources (310) du récepteur est modifié.

2. Système selon la revendication 1, dans lequel le programmateur est en outre en mesure d'envoyer (660) un message au fournisseur de contenus indiquant que la distribution du contenu ne peut pas être programmée si les ressources ne sont pas disponibles et si le programmateur n'est pas en mesure de reprogrammer la distribution des autres contenus.

3. Système selon la revendication 1, dans lequel le programme de fourniture comprend les ressources à utiliser dans la distribution du contenu et une heure à laquelle le contenu doit être distribué.

4. Système selon la revendication 1, dans lequel le fournisseur de contenus et le récepteur comprennent des ressources finies et dans lequel le programmateur est en mesure de recevoir du fournisseur de contenus une demande de programmation (580) de la distribution du contenu au récepteur.

5. Système selon la revendication 4, dans lequel, si les ressources ne sont pas disponibles, le programmateur est en mesure de tenter (640) de répondre à la demande en reprogrammant la distribution d'autres contenus numériques vers le récepteur.

6. Système selon la revendication 5, dans lequel le programmateur est en mesure (660) d'informer le fournisseur de contenus que la distribution du contenu ne peut pas être programmée si la distribution des autres contenus ne peut pas être reprogrammée.

7. Système selon la revendication 4, dans lequel le programmateur comprend un programme de ressources du récepteur (450) afin d'identifier les ressources disponibles chez le récepteur pour la réception du contenu.

8. Système selon la revendication 4, dans lequel le programmateur comprend un programme de ressources du fournisseur de contenus (440) en mesure d'identifier les ressources disponibles chez le fournisseur de contenus pour la distribution du contenu.

9. Système selon la revendication 4, dans lequel le programmateur comprend un programme de fourniture de contenus (480) afin d'identifier un ou plusieurs contenus qui ont été programmés pour leur distribution par le programmateur.

10. Procédé de programmation de la distribution de contenus entre des fournisseurs de continus (10) et des récepteurs (20), dans lequel les fournisseurs de contenus disposent d'un nombre fini de ressources de fourniture de contenus et les récepteurs disposent d'un nombre fini de ressources de réception pour la distribution des contenus, le procédé comprenant les étapes consistant à :
créer un premier programme de ressources (210) dans chaque fournisseur de contenus, afin d'identifier les ressources disponibles pour la distribution du contenu et une heure à laquelle les ressources sont disponibles ;
créer un second programme de ressources (310) dans chaque récepteur, afin d'identifier les ressources disponibles pour recevoir les contenus et une heure à laquelle les ressources sont disponibles ;
envoyer (570) à un programmateur (30) une demande de l'un des fournisseurs de contenus afin de programmer la distribution d'un contenu sélectionné, la demande identifiant au moins un récepteur pour la réception du contenu ;
en réponse à la demande, déterminer (610) sur le programmateur si les ressources sont disponibles pour la distribution du contenu sélectionné en utilisant le premier programme de ressources du fournisseur de contenus et le second programme de ressources d'au moins un récepteur ; et
si les ressources sont disponibles, envoyer (630) un programme de fourniture (230, 320) par le programmateur au fournisseur de contenus et au récepteur, le programme de fourniture comprenant les ressources à utiliser par le fournisseur de contenus dans la distribution du contenu, les ressources à utiliser par ledit au moins un récepteur dans la réception du contenu et l'heure à laquelle le contenu doit être distribué, et comprenant en outre l'étape consistant à :
envoyer un message par le fournisseur de contenus (10) au programmateur (30) lorsque le programme de ressources du fournisseur de contenus (210) est modifié et envoyer un message par le récepteur (20) au programmateur (30) quand le programme de ressources du récepteur (310) est modifié.

11. Procédé selon la revendication 10, comprenant en outre les étapes consistant à :
si les ressources ne sont pas disponibles, reprogrammer (640) la distribution d'autres contenus pour accepter la demande, si la reprogrammation est possible ; et
si la reprogrammation de la distribution d'autres contenus n'est pas possible, informer (660) le fournisseur de contenus que la distribution du contenu sélectionné ne peut pas être programmée.

12. Procédé selon la revendication 11, comprenant en outre l'étape consistant à envoyer (690) le programme de fourniture au fournisseur de contenus et audit au moins un récepteur, si la distribution des autres contenus peut être reprogrammée.

13. Procédé selon la revendication 12, dans lequel l'étape d'envoi comprend l'étape consistant à suspendre la distribution d'un contenu sélectionné parmi les autres contenus, si la distribution du contenu sélectionné a été reprogrammée et si le contenu est actuellement distribué par le fournisseur de contenus.

14. Procédé selon la revendication 13, dans lequel l'étape d'envoi comprend l'étape consistant à cesser la distribution du contenu sélectionné parmi les autres contenus si la distribution du contenu sélectionné n'a pas pu être reprogrammée et si le contenu est actuellement distribué par le fournisseur de contenus.

15. Procédé selon la revendication 10, dans lequel un boîtier de réception satellitaire constitue le récepteur.

16. Procédé selon la revendication 15, dans lequel, si les ressources du boîtier de réception satellitaire ne sont pas disponibles, le procédé comprend l'étape consistant à reprogrammer (640) la distribution d'autres contenus numériques vers le boîtier de réception satellitaire afin d'accepter la demande, si la distribution des autres contenus numériques peut être reprogrammée.

17. Procédé selon la revendication 16, comprenant l'étape consistant à informer (660) le fournisseur de contenus que la distribution du contenu sélectionné ne peut pas être programmée, si la distribution des autres contenus ne peut pas être reprogrammée.

18. Procédé selon la revendication 16, comprenant l'étape consistant à envoyer (690) le programme de fourniture (450) au fournisseur de contenus si la distribution des autres contenus peut être reprogrammée.

19. Procédé selon la revendication 18, dans lequel l'étape d'envoi comprend l'étape consistant à suspendre la distribution d'un contenu sélectionné parmi les autres contenus, si la distribution du contenu sélectionné a été reprogrammée et si le contenu est actuellement distribué par le fournisseur de contenus.

20. Procédé selon la revendication 19, dans lequel l'étape d'envoi comprend l'étape consistant à interrompre la distribution du contenu sélectionné parmi les autres contenus, si la distribution du contenu sélectionné n'a pas pu être reprogrammée et si le contenu est actuellement distribué par le fournisseur de contenus.
